# EUROPÄISCHE PATENTSCHRIFT

(11) **EP 1 016 809 B1**
(45) Veröffentlichungstag und Bekanntmachung des Hinweises auf die Patenterteilung: **10.12.2003**
(21) Anmeldenummer: 99125715.5
(22) Anmeldetag: 23.12.1999
(51) Int. Cl.: F16H 57/04

(54) **Sicherheitseinrichtung für die Schmierung eines Getriebes**
Safety device for lubrication system of a transmission
Dispositif de sécurité pour système de lubrification d'une transmission

(30) Priorität: 28.12.1998 DE 19860353
(43) Veröffentlichungstag der Anmeldung: 05.07.2000
(73) Patentinhaber: RENK AKTIENGESELLSCHAFT, 86159 Augsburg (DE)
(72) Erfinder: Schwertberger, Helmut, 86163 Augsburg (DE)
(74) Vertreter: Schober, Stefan, Dipl.-Ing.

(56) Entgegenhaltungen:
- WO-A-96/15392
- DE-U- 29 517 964
- US-A- 3 489 034

## Beschreibung

Die Erfindung betrifft ein Getriebe, insbesondere für den Antrieb von Generatoren durch Turbinen, bei dem das Getriebegehäuse unter einem Teilvakuum steht und dessen Betrieb durch besondere Sicherheitseinrichtungen überwacht und gesichert wird.

### [Stand der Technik]

Es ist allgemein bekannt, daß bei schnellaufenden Getrieben die aerodynamischen Verluste gegenüber der Reibung in den Vordergrund treten. Zur Verringerung dieser Ventilationsverluste wird die, die rotierenden Räder umgebende, Luft ganz oder teilweise aus diesem Bereich entfernt.
Die DE 295 17 964 U1 schlägt zu diesem Zweck ein Innengehäuse vor, welches die Räder eng umschließt und das mittels einer Pumpe unter Teilvakuum gehalten wird.
Der Einbau eines Innengehäuses stellt einen zusätzlichen Aufwand dar, der hohe Kosten verursacht.
Die Zuführungen für Schmier- und Kühlöl müssen aufwendig durch das Innengehäuse geführt werden und die Schmierölbrausen müssen im Inneren des Innengehäuses befestigt werden.
Bei Störungen an der Absaugpumpe kann - aufgrund des geringen Abstands des Innengehäuses zu den Rädern - der Ölsumpf schnell bis zu den Zahnflanken ansteigen und zur schlagartigen Abbremsung eines Rades führen, wodurch große Schäden an der gesamten Anlage verursacht werden.
Für jede Variation der Übersetzung des Getriebes und damit einhergehender Änderung der Räderdurchmesser ist ein spezielles eigenes Innengehäuse bereitzustellen.

Dokument US 3 489 034 offenbart ein Zahnradgetriebe gemäß dem Oberbegriff des Anspruchs 1.

### [Aufgabe der Erfindung]

Ausgehend vom Gebrauchsmuster DE 295 17 964 U1 ist es Aufgabe der Erfindung ein Getriebegehäuse aufzuzeigen, bei dem unter geringem Gehäuseaufwand ein Teilvakuum vorgegebener Größe aufrechterhalten werden kann, und das eine hohe Betriebssicherheit gewährleistet.
Die Aufgabe wird erfindungsgemäß durch die kennzeichnenden Merkmale des Patentanspruchs 1 gelöst.

Durch die erfindungsgemäße Gestaltung wird in vorteilhafterweise auf ein zusätzliches Innengehäuse verzichtet und der damit verbundene technische Aufwand entfällt.
Durch den unverbauten Innenraum ist die optimale Anordnung von Schmierölbrausen und Absaugvorrichtungen bei der erfindungsgemäßen Ausgestaltung des Gehäuses, ohne technischen Mehraufwand möglich.
Durch den Wegfall des eng-anliegenden Innengehäuses ist die Variation verschiedener Übersetzungen in einem erfindungsgemäßen Getriebegehäuse möglich.

### [Beispiele]

Die Erfindung und der Stand der Technik werden in den Zeichnungen näher erläutert. Die Zeichnungen zeigen im einzelnen:
- Figur 1:: Stand der Technik anhand eines Längsschnitts durch ein Getriebegehäuse mit einem Innengehäuse
- Figur 2:: Prinzipaufbau eines erfindungsgemäßen Konstruktionsbeispiels

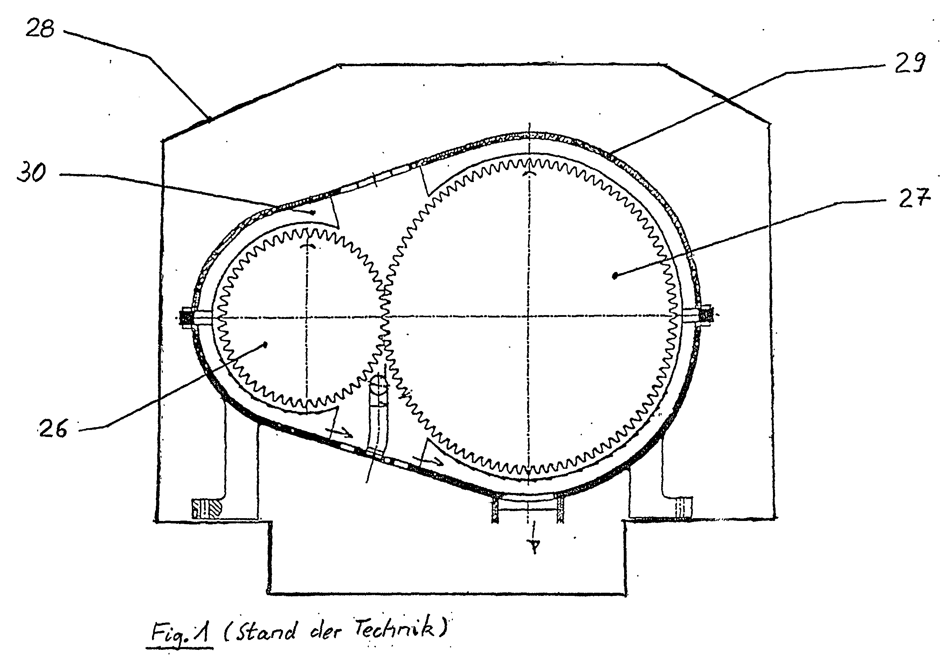

In Figur 1 ist ein Ausführungsbeispiel entsprechend dem Stand der Technik dargestellt. In einem Hauptgehäuse (28) ist ein Zahnrad (26) angeordnet, welches mit einem Zahnrad (27) in Eingriff steht. Eng an die Außendurchmesser der Zahnräder (26, 27) angepaßt, umschließt ein Innengehäuse (29) diesen Räderzug. Das Innengehäuse (29) ist am Hauptgehäuse (28) befestigt. Im Innenraum (30) des Innengehäuses (29) wird mittels einer nicht dargestellten Pumpe ein Teilvakuum erzeugt. Der Raum zwischen dem Innengehäuse (29) und dem Hauptgehäuse (28) steht unter Atmosphärendruck.

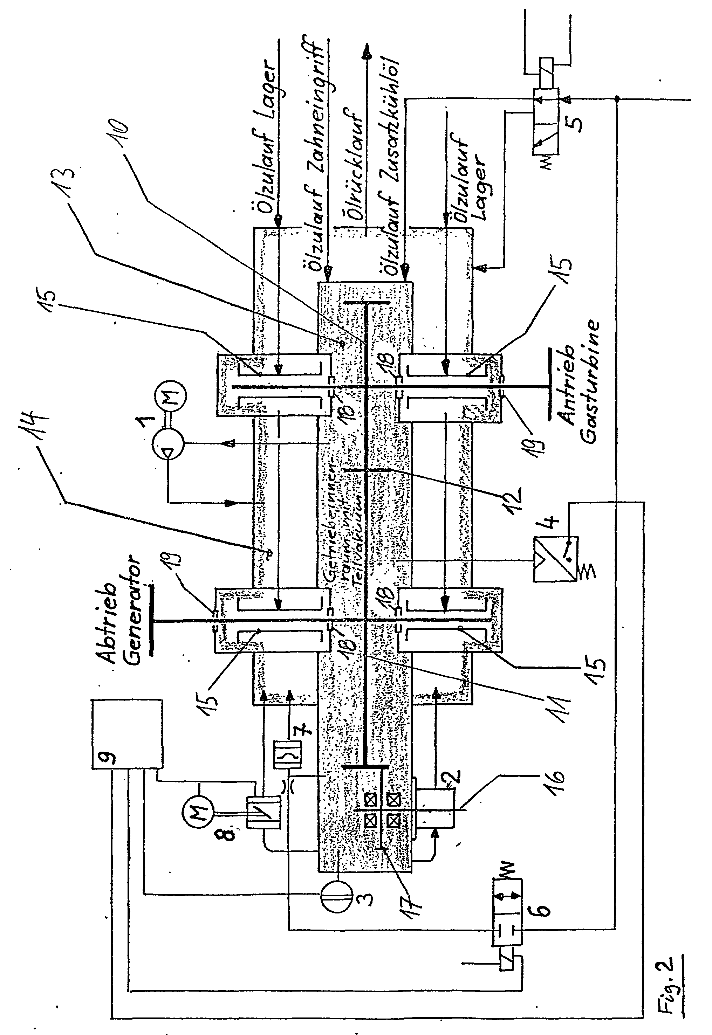

Die Figur 2 zeigt den funktionellen Aufbau eines erfindungsgemäßen Konstruktionsbeispiels. Im Getriebeinnenraum (13) sind Zahnräder (10, 11) angeordnet, die am Zahneingriff (12) miteinander kämmen. Im Getriebeinnenraum (13) wird durch eine Vakuumpumpe (1) ein Teilvakuum erzeugt und über die Betriebszeit des Getriebes aufrechterhalten. Als Teilvakuum wird der Zustand bezeichnet, bei welchem noch ein geringer Luftdruck in einem Innenraum vorhanden ist. Der Lagerbereich (14) des Gehäuses ist räumlich vom Getriebeinnenraum (13) abgetrennt und steht unter Atmosphärendruck. Die im Lagerbereich (14) eingelassenen Lager (15) sind gegenüber dem Teilvakuum des Getriebeinnenraums (13) durch Dichtungen (18) abgeschottet. Es ist jedoch möglich die hydrodynamische Schmierfunktion der Lager (15) auch im Teilvakuum aufrechtzuerhalten, so daß in diesem Fall, die Dichtungen (18) überflüssig werden. Die Austrittstellen der An- und Abtriebswelle durch das Getriebegehäuse sind gegen Lecköl mit Öldichtungen (19) versehen. Der Zahneingriff (12) wird durch Ölströme geschmiert, die mit Ölbrausen oberhalb und unterhalb des Zahneingriffs (12) zugeführt werden. Die Ölmengen für den Zulauf von Schmierund Kühlöl werden von nicht dargestellten Einrichtungen gefördert, die in der Lage sind auch Zusatzkühlölmengen zuzuführen. Das sich im Sumpf sammelnde Öl wird durch die Ölabsaugpumpe (2) aus dem Gehäuse gefördert. Die Ölabsaugpumpe (2) ist an die Gehäusewand angeflanscht und wird durch ein, auf der Pumpenwelle (16), befestigtes Zahnrad, das im Getriebeinnenraum mit dem Zahnrad (11) in Eingriff steht, angetrieben. Die Ölabsaugpumpe (2) ist so ausgelegt, daß sie auch in der Lage ist die Zusatzkühlölmenge zu fördern. Der Antrieb dieser Ölabsaugpumpe (2) ist auch über einen vom Hauptgetriebe unabhängigen Elektromotor oder direkt durch eine Welle des Hauptgetriebes möglich. Der sichere Betrieb des Getriebes wird durch automatische Überwachungs- und Sicherheitseinrichtungen gewährleistet. Dazu sind im Getriebeinnenraum (13) zur Überwachung des Innendrucks ein Druckwächter (4) (den Druck des Teilvakuums aufnehmender Sensor) und zur Kontrolle des Ölstandes ein Niveauwächter (3) (die Ölmenge erfassender Sensor) angebracht. Als Stelleinrichtungen oder Sicherheitseinrichtungen zur Aufrechterhaltung des Betriebs im Störfall und Einleitung von Sicherheitsmaßnahmen zur Vermeidung von Schäden am Getriebe ist ein Magnetventil (5) zur Regelung des Zuflusses von Zusatzkühlöl vorgesehen, zum Abführen einer Übermenge von Öl öffnet eine motorbetätigte Absperrklappe (8) dem Ölstrom einen zusätzlichen Äbflußkanal. Bei Auslösen einer zweiten Schaltstufe des Niveauwächters (3) - durch weiter ansteigenden Ölstand - wird über ein Magnetventil (6) ein Ölstrom zur Berstscheibe (7), eine weitere Sicherheitsvorrichtung, geleitet, der die Berstscheibe (7) zerstört und damit einen weiteren Ölablauf öffnet. Die koordinierte Ansteuerung der Stelleinrichtungen und Schaltung der Vakuumpumpe erfolgt durch eine batteriegepufferte Steuerungseinheit (9). Durch die Sicherheitsschaltungen in der Steuerungseinheit (9) läuft das Getriebe bei Erkennung von Fehlfunktionen automatisch auf Normalbetrieb, das heißt Betrieb unter Atmosphärendruck oder bei qualitativ schlechterem Teilvakuum, weiter. Die Steuerungseinheit (9) regelt - bei diesen mit höherer Verlustleistung behafteten Zuständen - den Zulauf von Zusatzkühlöl und das Absaugen bzw. die Abfuhr des Öls.

### [Bezugszeichenliste]

- 1: Vakuumpumpe
- 2: Ölabsaugpumpe
- 3: Niveauwächter
- 4: Druckwächter
- 5: Magnetventil
- 6: Magnetventil
- 7: Berstscheibe
- 8: Absperrklappe
- 9: Steuerungseinheit
- 10: Zahnrad
- 11: Zahnrad
- 12: Zahneingriff
- 13: Getriebeinnenraum (mit Teilvakuum)
- 14: Lagerbereich (unter Atmosphärendruck)
- 15: Lager
- 16: Pumpenwelle
- 17: Zahnrad
- 18: Dichtung
- 19: Öldichtung

- 26: Zahnrad
- 27: Zahnrad
- 28: Hauptgehäuse
- 29: Innengehäuse
- 30: Innenraum unter Teilvakuum

## Patentansprüche

1. Zahnradgetriebe mit zwei oder mehr miteinander in Eingriff stehenden Zahnrädern, mindestens in einem Teilvakuum laufendes Getriebe, mit Mitteln zur Zufuhr von Schmier- und/oder Kühlöl in den Ein- oder Ausgriff der Zahnräder, wobei die die Zahnräderwellen tragenden Lager unter Zwischenschaltung von Dichtungen an das Teilvakuum angrenzen oder sich vollständig im Teilvakuum befinden, **dadurch gekennzeichnet, daß** im Teilvakuum ein erster, den Druck des Teilvakuums aufnehmender Sensor angeordnet ist, der, bei Abweichung des Teilvakuums gegenüber einem vorgegebenen Druckbereich, Sicherheitseinrichtungen aktiviert, und daß ein zweiter, die Ölmenge erfassender, Sensor angeordnet ist, der zusätzlich zu den Sicherheitseinrichtungen weitere Sicherheitsvorrichtungen aktiviert.

2. Zahnradgetriebe nach Anspruch 1, **dadurch gekennzeichnet, daß** mindestens eine, das Teilvakuum erzeugende, Vakuumpumpe angeordnet ist, und mindestens eine weitere Pumpe angeordnet ist, die das Öl absaugt.

3. Zahnradgetriebe nach Anspruch 1, **dadurch gekennzeichnet, daß** mindestens eine Pumpe angeordnet ist, durch die die Luft evakuiert wird und das Öl abgesaugt wird.

4. Zahnradgetriebe nach Anspruch 2 oder 3, **dadurch gekennzeichnet, daß** eine mindestens eine Pumpe direkt über ein auf der Pumpenwelle angeordnetes Zahnrad angetrieben wird, das mit einem Hauptgetriebe in Eingriff steht.

5. Zahnradgetriebe nach Anspruch 2 oder 3, **dadurch gekennzeichnet, daß** die Pumpen von mindestens einem Motor angetrieben werden.

6. Zahnradgetriebe nach Anspruch 1, **dadurch gekennzeichnet, daß** die Sicherheitseinrichtungen eine batteriegepufferte Steuerungseinheit aufweisen.

7. Zahnradgetriebe nach Anspruch 1, **dadurch gekennzeichnet, daß** der, die Ölmenge erfassende, Sensor mindestens zwei Schaltstufen aufweist, wodurch die verschiedenen Sicherheitseinrichtungen entsprechend der, im Gehäuse befindlichen, Ölmenge betätigbar sind.

8. Zahnradgetriebe nach Anspruch 1, **dadurch gekennzeichnet, daß** der Ölstrom für den zusätzlichen Ölablauf durch eine Berstscheibe geleitet wird.

## Claims

1. Toothed wheel gear unit having two or more toothed wheels that are engaged with each other, a gear unit running at least in a partial vacuum, having means to supply lubricating and/or cooling oil into the engaged or non-engaged portions of the toothed wheels, the bearings which support the toothed wheel shafts bordering on the partial vacuum with interposition of seals or being located completely in the partial vacuum, **characterised in that** arranged in the partial vacuum there is a first sensor which picks up the pressure of the partial vacuum and which, in the event of deviation of the partial vacuum from a predetermined pressure range, activates safety devices, and **in that** a second sensor is provided that detects the quantity of oil and activates further safety arrangements in addition to the safety devices.

2. Toothed wheel gear unit according to claim 1, **characterised in that** at least one vacuum pump that generates the partial vacuum is provided and at least one further pump that removes the oil by suction is provided.

3. Toothed wheel gear unit according to claim 1, **characterised in that** at least one pump is provided through which the air is evacuated and the oil is removed by suction.

4. Toothed wheel gear unit according to claim 2 or 3, **characterised in that** at least one pump is driven directly by way of a toothed wheel that is arranged on the pump shaft and is engaged with a main gear unit.

5. Toothed wheel gear unit according to claim 2 or 3, **characterised in that** the pumps are driven by at least one motor.

6. Toothed wheel gear unit according to claim 1, **characterised in that** the safety devices have a control unit with battery back-up.

7. Toothed wheel gear unit according to claim 1, **characterised in that** the sensor that detects the quantity of oil has at least two switch steps, whereby the various safety devices can be actuated in accordance with the quantity of oil located in the housing.

8. Toothed wheel gear unit according to claim 1, **characterised in that** the oil flow for the additional oil drain is directed through a bursting disc.

## Revendications

1. Transmission à engrenages avec deux ou plusieurs engrenages en prise les uns avec les autres, transmission fonctionnant au moins dans un vide partiel, avec des moyens pour l'arrivée de l'huile lubrifiante et/ou de l'huile réfrigérante dans l'engrènement ou le désengrènement des engrenages, les paliers portant les arbres d'engrenages étant contigus au vide partiel avec l'intercalage de joints ou se trouvant complètement dans le vide partiel, **caractérisée en ce qu'**un premier capteur, recevant la pression du vide partiel, est disposé dans le vide partiel, lequel active des dispositifs de sécurité en cas d'écart du vide partiel par rapport à une plage de pression prédéfinie, et **en ce qu'**il est disposé un second capteur enregistrant la quantité d'huile, qui active d'autres dispositifs de sécurité en supplément des appareils de sécurité.

2. Transmission à engrenages selon la revendication 1, **caractérisée en ce qu'**il est disposé au moins une pompe à vide générant le vide partiel et au moins une autre pompe qui évacue l'huile par aspiration.

3. Transmission pour engrenages selon la revendication 1, **caractérisée en ce qu'**il est disposé au moins une pompe par laquelle l'air est évacué et l'huile est évacuée par aspiration.

4. Transmission à engrenages selon la revendication 2 ou 3, **caractérisée en ce qu'**au moins une pompe est entraînée directement par un engrenage disposé sur l'arbre de pompe, qui est en prise avec une transmission principale.

5. Transmission à engrenages selon la revendication 2 ou 3, **caractérisée en ce que** les pompes sont entraînées par au moins un moteur.

6. Transmission à engrenages selon la revendication 1, **caractérisée en ce que** les appareils de sécurité présentent une unité de commande sauvegardée par piles.

7. Transmission à engrenages selon la revendication 1, **caractérisée en ce que** le capteur enregistrant la quantité d'huile présente au moins deux niveaux de commutation, de sorte que les différents appareils de sécurité peuvent être actionnés en fonction de la quantité d'huile qui se trouve dans la transmission.

8. Transmission à engrenages selon la revendication 1, **caractérisée en ce que** le flux d'huile pour l'évacuation d'huile supplémentaire est guidé par un disque d'éclatement.
